Europäisches Patentamt

European Patent Office

Office européen des brevets

(11) Publication number: **0 263 885**
**B1**

(12) **EUROPEAN PATENT SPECIFICATION**

(45) Date of publication of patent specification: **31.10.90**

(51) Int. Cl.⁵: **C 08 L 9/06, C 08 L 7/00**

(21) Application number: **87902713.4**

(22) Date of filing: **09.04.87**

(86) International application number:
**PCT/JP87/00222**

(87) International publication number:
**WO 87/06246 22.10.87 Gazette 87/23**

(54) **RUBBER COMPOSITION FOR TIRE TREAD.**

(30) Priority: **10.04.86 JP 82489/86**

(43) Date of publication of application:
**20.04.88 Bulletin 88/16**

(45) Publication of the grant of the patent:
**31.10.90 Bulletin 90/44**

(84) Designated Contracting States:
**DE FR GB**

(56) References cited:
**JP-A-56 163 908**
**JP-A-57 100 146**

(73) Proprietor: **SUMITOMO CHEMICAL COMPANY, LIMITED**
**Kitahama 4-chome 5-33**
**Chuo-ku Osaka 541 (JP)**

(73) Proprietor: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **TAKAO, Hiroyoshi**
**7-16, Kurosunadai 3-chome**
**Chiba-shi, Chiba 281 (JP)**
Inventor: **YOSHIDA, Nobuyuki**
**19-4, Aobadai 4-chome**
**Ichihara-shi, Chiba 299-01 (JP)**
Inventor: **IMAI, Akio**
**17-10, Aobadai 3-chome**
**Ichihara-shi, Chiba 299-01 (JP)**
Inventor: **TSUJI, Mitsuji**
**9, Yushudainishi 1-chome**
**Ichihara-shi, Chiba 299-01 (JP)**
Inventor: **SAITO, Yuichi**
**4-5-404, Honjo-cho 1-chome**
**Higashinada-ku, Kobe-shi, Hyogo 658 (JP)**

(74) Representative: **Türk, Gille, Hrabal**
**Brucknerstrasse 20**
**D-4000 Düsseldorf 13 (DE)**

**Description**

Technical Field

The present invention relates to a rubber composition for use in the tread of automobiles tires, and more particularly to a rubber composition suitable for use in the tread of low fuel cost tires and having excellent wet skid characteristic, excellent rolling resistance characteristic and excellent skid characteristic on ice-snow road.

Background Art

In recent years, the reduction of running fuel cost of automobiles has been in strong demand increasingly. Among others, the characteristics of tire have an important effect on fuel cost saving, the improvement being strongly desired.

The characteristics required for tires are principally wearing resistance, wet skid resistance, low heat generation, bending resistance, chipping resistance and groove cracking resistance, and they must be well-balanced. Particularly, from the view point of resource and energy saving, low energy loss and low rolling resistance are important.

Among these characteristics, high wet skid resistance for driving stability and low rolling resistance for fuel cost saving are particularly important, but the both characteristics have been recognized as contrary to each other from the conventional knowledge.

The present inventors have made a fundamental study of wet skid resistance and rolling resistance conventionally considered as antinomic, and further they made a study of the structure of polymers having excellent processabilities such as kneading processability, roll processability and extrusion processability required for manufacturing tire practically and a study of the manufacturing process of such polymers. They found that a branched polymer having a special structure has both of high wet skid resistance characteristic and excellent rolling resistance characteristic and further excellent processability, and previously filed a patent application (U.S. Patent 4,523,618).

Also, rubber compositions for use in treads of tires of low fuel cost are likewise proposed by the present inventors (Japanese Unexamined Patent Publication No. 4633/1984 and No. 4634/1984 and USP 4,523,618). These are compositions wherein the main rubber components are copolymers of vinyl aromatic compounds and butadiene having a special structure and a special molecular weight distribution or a mixture, and they have both a high wet skid resistance characteristic and an excellent rolling resistance characteristic and further excellent processability and excellent practical moldability required in tire molding.

Recently, in tires of low fuel cost, a skid resistance characteristic on ice-snow road is newly required, the improvement of the skid resistance characteristic on ice-snow road with the above rubber compositions being not always satisfactory.

On the other hand, as an example of a method for elevating the steering stability during running on a cold road in the winter, a composition for use in the tread portion of so-called high performance tires has been proposed by the present inventors, wherein a solution-polymerized SBR having a relatively high styrene content is blended with a plasticizer such as sebacic acid ester, adipic acid ester and aliphatic acid ester and with carbon black of a special structure (WO85/04888). Also, as examples proposed by other persons than the present inventors, compositions disclosed in Japanese Unexamined Patent Publication No. 215403/1985 etc. are known. In those examples, a plasticizer or a naphthenic or paraffinic softener is incorporated in order to lower the hardness of the rubber composition at a low temperature, thereby elevating the skid resistance characteristic on ice-snow road.

On the other hand, compared with a so-called aromatic process oil usually used for the composition for use in tire tread, these additives sometimes lower the dispersibility of carbon black in solution-polymerized SBR or BR, particularly in a composition for use in tire tread for low fuel cost, lowering the breaking strength, elongation at break or bending crack resistance of the cured product, thus sometimes effecting a bad influence on the destruction characteristic of the tire.

An object of the present invention is to provide a rubber composition for use in tire tread which has excellent wet skid characteristic and skid resistance characteristic on ice-snow road with maintaining excellent low rolling resistance and high destruction resistance of a conventional rubber composition for use in tires of low fuel cost.

The present inventors have checked the characteristics of compositions using conventional, commercially available various rubbers. The composition containing an emulsion-polymerized SBR as a main rubber component has a good wet skid characteristic and a relatively good destruction characteristic, but is unsuitable for the composition for use in tire of low fuel cost owing to high rolling resistance, and also since the skid resistance characteristic on ice-snow road is low owing to high hardness at a low temperature, it is an unsatisfactory composition for the object of the invention. The composition, wherein the main rubber component is one or more of high-cis polybutadiene rubber, high-cis polyisoprene rubber and natural rubber, has a low rolling resistance and a good skid resistance characteristic on ice-snow road, but is undesirable from the view point of the safety for driving automobile because of low wet skid resistance.

Accordingly, as a composition for use in tire of low fuel cost improved in skid resistance on ice-snow

2

road, a rubber mixture wherein the rubbers of above two groups are mixed in a defined ratio has been usually used, but in this case all the characteristics of rolling resistance, wet skid resistance and skid resistance on ice-snow road are in unsatisfactory levels. It is the present situation in this industry that a rubber mixture is used with compromising.

Thus, a rubber composition for use in tire tread, which has an equal or more excellent wet skid resistance characteristic with that of emulsion-polymerized SBR and moreover has an excellent low rolling resistance and an improved skid resistance on ice-snow road, is strongly demanded in this industry.

The inventors of the present invention, in view of such background, have assiduously made studies of the relationship between the characteristics of various rubber compositions, the structure of polymers used as rubber components and the properties of rubber additives. As a result, they have found that a rubber composition, which contains as a rubber component a solution-polymerized SBR having a special molecular structure, that is, molecular weight, branched structure and microstructure and which uses specified carbon black and process oil as additives to be incorporated, satisfies the above-mentioned object, and have reached the present invention.

Disclosure of the Invention

That is to say, the present invention relates to a rubber composition for tire treads comprising 100 parts by weight of a rubber component containing (A) not less than 40 parts by weight of a solution polymerized SBR having a bound styrene content (S) and a vinyl content (V) of the butadiene portion defined by the following equations (i), (ii) and (iii), having a proportion of polymer chains modified by a trifunctional or tetrafunctional coupling agent of not less than 40% by weight, and having an intrinsic viscosity of not less than 1.7 to less than 3.0 in toluene solution at 30°C, and (B) not more than 60 parts by weight of at least one member selected from the group consisting of an emulsion polymerized SBR, natural rubber, synthetic polyisoprene rubber and high-cis butadiene rubber;

(C) 5 to 25 parts by weight of a process oil having a flow point of 0° to less than 30°C; and

(D) 40 to 70 parts by weight of carbon black having an average particle size of not more than 30 nm

$$0 \leqq S < 30 \ (\% \ \text{by weight}) \qquad\qquad (i)$$
$$10 \leqq V \leqq 70 \ (\% \ \text{by weight}) \qquad\qquad (ii)$$
$$70 \leqq 2.6S + V \leqq 85 \qquad\qquad (iii)$$

said parts of (C) and (D) being parts by weight per 100 parts by weight of said rubber component.

Best mode for practicing the Invention

In the invention, the intrinsic viscosity of the rubber component (A), namely the solution-polymerized SBR in toluene at 30°C is not less than 1.7 to less than 3.0. When the intrinsic viscosity is less than 1.7, the rolling resistance characteristic becomes worse. When the intrinsic viscosity is not less than 3.0, the kneading and extrusion processability is impaired, thus bringing about serious defects in the manufacture of tire.

When the bound styrene content (S) is not less than 30% by weight or the vinyl content (V) in the butadiene portion is more than 70% by weight or the total of 2.6-fold of the bound styrene content (% by weight) and the vinyl content (2.6S + V) is more than 85, the hardness of cured rubber composition of the solution-polymerized SBR rises, resulting in poor skid resistance characteristic on ice-snow road.

On the other hand, when the V is less than 10% by weight or the 2.6S + V is less than 70, the wet skid resistance characteristic drops, being undesirable.

From these viewpoints, the more desirable ranges are as follows:

$$10 \leqq S < 30 \ (\% \ \text{by weight}) \qquad\qquad (iv)$$
$$10 \leqq V \leqq 60 \ (\% \ \text{by weight}) \qquad\qquad (v)$$
$$75 \leqq 2.6S + V \leqq 85 \qquad\qquad (vi)$$

In order to obtain a rubber composition of excellent processability, particularly excellent roll bugging property at extrusion, extrusion surface and sheet tackiness, the polymer chains are modified by a trifunctional or tetrafunctional coupling agent. When the proportion of the modified chains is less than 40% by weight, the effects on the improvement of processability is small. In view of the effects on the improvement of processability, it is further preferable that the proportion of the modified chains is not less than 50% by weight.

The process for preparing the rubber component (A), solution-polymerized SBR, used in the invention is as follows:

In copolymerization of styrene and butadiene in the presence of an organo-alkali metal compound as an initiator in a hydrocarbon solvent, the copolymerization is conducted in the presence of Lewis basic compounds such as ethers or tertiary amines. By reacting a trifunctional or tetrafunctional coupling agent to the so-called "living active ends" in the copolymer solution, the rubber component (A) can be synthesized. As the organo-alkali metal compound, in view of the stability of polymerization reaction, particularly alkyl-lithium compounds are preferably used. Also, as the trifunctional or tetrafunctional

3

coupling agent, from the view point of the control of the coupling reaction, there are preferred silicon tetrachloride, tin tetrachloride, germanium tetrachloride, methyltrichlorosilane, dimethyl adipate, diethyl adipate, di-n-butyl adipate, dimethyl maleate, di-n-butyl maleate, di-n-octyl maleate, and mixtures thereof. Particularly preferable coupling agents are silicon tetrachloride, tin tetrachloride and methyltrichlorosilane.

As a method for manufacturing a polymer containing such modified branched polymer chains, known living anionic polymerization methods using an alkali metal compound as a polymerization initiator are effective, and there can be adopted a process wherein the active polymer ends are coupled with each other by acting a coupling agent on a living active polymer solution.

In this case, the weight proportion of the coupled branched polymer chains in the whole polymer can be determined from the molecular weight distribution measured by gel permeation chromatograph (GPC). That is to say, the weight ratio of the branched polymer chains to the unbranched polymer chains is defined by the relative ratio of the height of a peak corresponding to the average molecular weight of the branched polymer chains to the height of a peak corresponding to the average molecular weight of the unbranched polymer chains.

In the solution-polymerized SBR, the coupled polymer chains may have a form modified with either a trifunctional or tetrafunctional coupling agent or a mixture of them.

To obtain such a preferable proportion of the modified polymer chains, in preparing the solution-polymerized, SBR, the molar ratio of the coupling agent to the active polymer ends should be controlled, for instance, in case of employing a tetrafunctional coupling agent, the amount of the agent is not less than 0.1 mole per mole of the active polymer ends.

In the present invention, the solution-polymerized SBR is required to be contained in an amount of not less than 40 parts by weight in 100 parts by weight of the rubber component. When the amount is less than 40 parts by weight, the wet skid resistance characteristic and the skid resistance characteristic on ice-snow road become worse. The particularly preferable content is 60 to 90 parts by weight.

In the invention, as a rubber component (B), at least one of natural rubber, synthetic polyisoprene rubber, high-cis butadiene rubber and emulsion-polymerized SBR (for instance, an SBR having 23.57% by weight of styrene content and 18.7% by weight of vinyl content) can be employed.

These polymers are employed preferably in an amount of not more than 60 parts by weight in 100 parts by weight of the rubber component. The particularly preferable range is from 10 to 40 parts by weight. When the polymers are employed in an amount more than the above range, in case of natural rubber, synthetic polyisoprene rubber or high-cis butadiene rubber, the wet skid resistance characteristic is lowered, and in case of the emulsion-polymerized, SBR, the skid resistance characteristic on ice-snow road is lowered. On the other hand, the use of there polymers in an amount not less than 10 parts by weight is preferable, since the tackiness is increased in molding the composition into tire, thus preventing troublesome phenomena such as demold splitting.

In the invention, in order to exhibit the excellent wet skid resistance characteristic, skid resistance characteristic on ice-snow road and the low rolling resistance characteristic obtained by the use of solution-polymerized SBR as mentioned above, and in order to maintain the breaking resistance characteristic as obtained by conventional compositions for tires, (C) from 5 to 25 parts by weight of a process oil having a flow point of 0° to less than 30°C is incorporated per 100 parts by weight of the rubber component.

As such a process oil, an oil having a high aromatic compound content, namely a so-called aromatic oil, is particularly preferable.

When an oil having a flow point of not less than 30°C is employed, the skid characteristic on ice-snow road becomes worse and also the viscosity of the composition rises, resulting in an operational difficulty in handling.

On the other hand, when an oil having a flow point of less than 0°C is employed, the wet skid characteristic becomes worse, and also the breaking strength and the maximum elongation at break of the cured composition are lowered.

In the invention, in order to improve the steering characteristic and wearing resistance, it is necessary that carbon black (D) incorporated in the composition is those having an average particle size of not more than 30 nm. For instance, carbon blacks of ASTM N110, N220, N234, N330 and N339 are employed. When the average particle size of carbon black is more than 30 nm, the reinforcement is lowered, thus the wear resistance is poor. In addition, the steering characteristic is lowered.

Carbon black is incorporated in an amount of 40 to 70 parts by weight per 100 parts by weight of the rubber component.

As a matter of course, the rubber composition prepared as mentioned above can be incorporated with additives used in usual tread rubber compounding, e.g. wax, antioxidant, curing agent, curing coagent and curing accelerator.

The present invention is explained by means of Examples in order to more clarify the invention, but the present invention is not limited to the Examples.

The measurement of physical properties in the Examples and Comparative Examples was made under the following conditions.

Intrinsic viscosity [η]

The measurement was made at 30°C in toluene solvent by employing an Ostwald's viscometer.

Proportion of modified polymer chains in solution-polymerized SBR

A gel permeation chromatograph HLC-802UR made by Toyo Soda Manufacturing Co., Ltd. was used, and columns of $10^3$, $10^4$, $10^6$ and $10^7$ were selected as distribution columns. A refractometer was used as a detector. The molecular weight distribution of a polymer was measured at 40°C by using tetrahydrofuran (THF) as a developing solvent. The relative ratio of the height of the peak corresponding to the average molecular weight of the modified polymer chains to the height of the peak corresponding to the average molecular weight of the nonmodified polymer chains was defined as the weight ratio of the respective polymer chains.

Steel tires having a size of 185/70HR/13 prepared using compositions of the recipe shown in Table 1, and the rolling resistance, wet skid resistance and skid resistance on ice-snow road were evaluated. The evaluation methods are as follows.

The components of the rubber composition and the evaluation results of the properties of tire prepared by using the composition are shown in Table 2 and Table 3 respectively. From Table 3, it is understood that the compositions in Examples of the invention have excellent properties.

Rolling resistance index

The above-mentioned tire was attached to a rim of $5\frac{1}{2}$ J × 13, and the rolling resistance was measured by causing the tire to run on a 60 inch drum under conditions of $20.59 \cdot 10^4$ Pa (2.10 kgf/cm$^2$) in inner pressure, 300 kg in load and 80 km/hr in speed. The rolling resistance characteristic is represented in Table 3 as an index to the result of Comparative Example 1. The smaller the value, the more excellent the rolling resistance characteristic.

Wet skid resistance characteristic

The above-mentioned tires were attached to rims of $5\frac{1}{2}$ J × 13, and were fitted to a 1500 ml passenger car. The car was run on a slippery concrete road sprinkled with water at a speed of 60 km/hour with one passenger. The coefficient of friction $\mu$ was calculated from the stopping distance. The wet skid characteristic is represented as an index to the result of Comparative Example 1. The larger the value, the more excellent the wet skid characteristic.

Skid resistance characteristic on ice-snow road

The characteristic in running on snow trodden hard at −5°C was measured and evaluated in five steps.

(superior) ← 5, 4, 3, 2, 1 → (inferior)

### Table 1

| | |
|---|---|
| Polymer | 100 parts by weight |
| Carbon black | (variable) |
| Oil | (variable) |
| Wax | 2 |
| Antioxidant | 2 |
| Stearic acid | 1 |
| Zinc oxide | 3 |
| Sulfur | 1.75 |
| Accelerator [1] | 1 |

(Note)  1): N-cyclohexyl-2-benzothiazolylsulfenamide

EP 0 263 885 B1

Table 2

| Test No. | 1 | 2 | 3 |
|---|---|---|---|
| | Com. Ex. | Com. Ex. | Com. Ex. |
| Kind of SBR | Emulsion-polymerized SBR | Solution-polymerized SBR | Solution-polymerized SBR |
| Intrinsic viscosity [η] | 1.75 | 2.23 | 2.10 |
| Bound styrene content (wt.%):S | 23.5 | 25 | 30 |
| Vinyl cont. of butadiene portion (wt.%):V[*1] | 18 | 40 | 13 |
| 2.6S+V | − | 105 | 91 |
| Proportion of modified polymer chains (wt.%) | − | 60 | 60 |
| Carbon black | N-339 | N-339 | N-339 |
| (Average particle size) nm | (26 to 30) | (26 to 30) | (26 to 30) |
| (Amount) part by weight | 60 | 60 | 60 |
| (2) Amount of SBR (part by weight)[*2] | 80 | 80 | 80 |
| (3) Other rubber component | Natural rubber | Natural rubber | Natural rubber |
| (4) Amount of the other rubber component (part by weight)[*2] | 20 | 20 | 20 |
| (5) Process oil | Aromatic oil | Aromatic oil | Aromatic oil |
| Flow point (°C) | 12.5 | 12.5 | 12.5 |
| Amount (part by weight)[*3] | 20 | 20 | 20 |
| (6) Hardness (@ −20°C) | 86 | 94 | 86 |

Table 2 (continued)

| Test No. | 4 | 5 | 6 |
|---|---|---|---|
|  | Com. Ex. | Example | Example |
| Kind of SBR | Solution-polymerized SBR | Solution-polymerized SBR | Solution-polymerized SBR |
| Intrinsic viscosity [η] | 2.36 | 2.18 | 2.23 |
| Bound styrene content (wt.%):S | 19 | 16 | 25 |
| Vinyl cont. of butadiene portion (wt.%):V[*1] | 13 | 36 | 14 |
| 2.6S+V | 62 | 78 | 79 |
| Proportion of modified polymer chains (wt.%) | 60 | 60 | 60 |
| Carbon black | N-339 | N-339 | N-339 |
| (Average particle size) nm | (26 to 30) | (26 to 30) | (26 to 30) |
| (Amount) part by weight | 60 | 60 | 60 |
| (2) Amount of SBR (part by weight)[*2] | 80 | 80 | 80 |
| (3) Other rubber component | Natural rubber | Natural rubber | Natural rubber |
| (4) Amount of the other rubber component (part by weight)[*2] | 20 | 20 | 20 |
| (5) Process oil | Aromatic oil | Aromatic oil | Aromatic oil |
| Flow point (°C) | 12.5 | 12.5 | 12.5 |
| Amount (part by weight)[*3] | 20 | 20 | 20 |
| (6) Hardness (@ -20°C) | 77 | 81 | 82 |

EP 0 263 885 B1

Table 2 (continued)

| Test No. | 7 | 8 | 9 | 10 |
|---|---|---|---|---|
| | Com. Ex. | Com. Ex. | Example | Com. Ex. |
| Kind of SBR | Solution-polymerized SBR | Solution-polymerized SBR | Solution-polymerized SBR | Solution-polymerized SBR |
| Intrinsic viscosity [η] | 2.43 | 2.03 | 2.28 | 3.28 |
| Bound styrene content (wt.%):S | 24 | 24 | 10 | 24 |
| Vinyl cont. of butadiene portion (wt.%):V[*1] | 15 | 16 | 50 | 14 |
| 2.6S+V | 77 | 78 | 76 | 76 |
| Proportion of modified polymer chains (wt.%) | 30 | 60 | 60 | 0 |
| Carbon black | N-339 | N-339 | N-339 | N-339 |
| (Average particle size)nm | (26 to 30) | (26 to 30) | (26 to 30) | (26 to 30) |
| (Amount) part by weight | 60 | 60 | 60 | 60 |
| (2) Amount of SBR (part by weight)[*2] | 80 | 80 | 80 | 80 |
| (3) Other rubber component | Natural rubber | Natural rubber | Natural rubber | Natural rubber |
| (4) Amount of the other rubber component (part by weight)[*2] | 20 | 20 | 20 | 20 |
| (5) Process oil | Aromatic oil | Naphthene oil | Aromatic oil | Naphthene oil |
| Flow point (°C) | 12.5 | -12.5 | 12.5 | -7.5 |
| Amount (part by weight)[*3] | 20 | 20 | 20 | 20 |
| (6) Hardness (@ -20°C) | 82 | 80 | 82 | 80 |

(Notes) *1 measured by infrared spectrometry

*2 parts by weight in 100 parts by weight of rubber component

*3 parts by weight per 100 parts by weight of rubber component

EP 0 263 885 B1

Table 3

| Test No. | 1 | 2 | 3 | 4 | 5 | 6 | 7 | 8 | 9 | 10 |
|---|---|---|---|---|---|---|---|---|---|---|
| | Com. Ex. | Com. Ex. | Com. Ex. | Com. Ex. | Ex. | Ex. | Com. Ex. | Com. Ex. | Ex. | Com. Ex. |
| Rolling resistance index | 100 | 93 | 95 | 93 | 90 | 93 | 96 | 94 | 90 | 96 |
| Wet skid resistance index | 100 | 107 | 102 | 96 | 101 | 102 | 100 | 98 | 102 | 102 |
| Skid characteristic on ice-snow road | 2.5 | 2 | 2.3 | $3^+$ [2] | $3^+$ | 3 | $3^+$ | $3^+$ | $3^+$ | $3^+$ |
| Processability [1] | ◯ | ◯ | ◯ | ◯ | ◯ | ◯ | ✕ | ◯ | ◯ | ✕ |

(Note) 1) Processability in kneading, extrusion and molding of the rubber composition was synthetically evaluated.

◯: good, ✕: bad

2) "$3^+$" indicates to be superior to 3.

**Claims**

1. A rubber composition for tire treads comprising:
100 parts by weight of a rubber component containing:
(A) not less than 40 parts by weight of a solution polymerized SBR having a bound styrene content (S) and a vinyl content (V) in the butadiene portion defined by the following equations (i), (ii) and (iii), having a proportion of polymer chains modified with a trifunctional or tetrafunctional coupling agent of not less than 40% by weight, and having an intrinsic viscosity of not less than 1.7 to less than 3.0 in toluene solution at 30°C and
(B) not more than 60 parts by weight of at least one member selected from the group consisting of an emulsion polymerized SBR, a natural rubber, a synthetic polyisoprene rubber and a high-cis butadiene rubber;
(C) 5 to 25 parts by weight of a process oil having a flow point of 0° to less than 30°C; and
(D) 40 to 70 parts by weight of carbon black having an average particle size of not more than 30 nm,

$$0 \leqq S < 30 \text{ (\% by weight)} \qquad \text{(i)}$$
$$10 \leqq V \leqq 70 \text{ (\% by weight)} \qquad \text{(ii)}$$
$$70 \leqq 2.6S + V \leqq 85 \qquad \text{(iii)}$$

said parts of (C) and (D) being parts by weight per 100 parts by weight of said rubber component.

2. The composition of Claim 1, wherein said component (A) is a solution polymerized SBR having a proportion of polymer chains modified with a trifunctional or tetrafunctional coupling agent of not less than 50% by weight.

3. The composition of Claim 1, wherein said component (A) is a solution polymerized SBR in which said bound styrene content (S) and said vinyl content (V) in the butadiene portion are defined by the following equations (iv) to (vi):

$$10 \leqq S < 30 \text{ (\% by weight)} \qquad \text{(iv)}$$
$$10 \leqq V \leqq 60 \text{ (\% by weight)} \qquad \text{(v)}$$
$$75 \leqq 2.6S + V \leqq 85 \qquad \text{(vi)}$$

4. The composition of Claim 1, wherein said trifunctional or tetrafunctional coupling agent in the component (A) is at least one compound selected from the group consisting of silicon tetrachloride, tin tetrachloride, germanium tetrachloride, methyltrichlorosilane, dimethyl adipate, diethyl adipate, di-n-butyl adipate, dimethyl maleate, di-n-butyl maleate and di-n-octyl maleate.

5. The composition of Claim 1, wherein said rubber component comprises 60 to 90 parts by weight of said component (A) and 10 to 40 parts by weight of said component (B).

**Patentansprüche**

1. Kautschukzusammensetzung für Reifenlaufflächen umfassend:
100 Gewichtsteile einer Kautschukkomponente enthaltend:
(A) nicht weniger als 40 Gewichtsteile eines in Lösung polymerisierten SBR mit einem Gehalt an gebundenem Styrol (S) und einem Vinylgehalt (V) in dem Butadienanteil definiert durch die folgenden Gleichungen (i), (ii) und (iii), mit einem Anteil an von nicht weniger als 40 Gew.-% an mit einem trifunktionellen oder tetrafunktionellen Kupplungsmittel modifizierten Polymerketten und mit einer intrinsischen Viskosität von nicht weniger als 1.7 bis weniger als 3.0 in Toluollösung bei 30°C und
(B) nicht mehr als 60 Gew.-% mindestens eines Mitglieds ausgewählt aus der Gruppe bestehend aus einem in Emulsion polymerisierten SBR, einem natürlichen Kautschuk, einem synthetischen Polyisoprenkautschuk und einem hoch-cis-Butadienkautschuk;
(C) 5 bis 25 Gewichtsteile eines Lauföls (process oil) mit einem Fließpunkt von 0° bis weniger als 30°C; und
(D) 40 bis 70 Gewichtsteile Ruß mit einer durchschnittlichen Teilchengröße von nicht mehr als 30 nm,

$$0 \leqq S < 30 \text{ (Gew.-\%)} \qquad \text{(i)}$$
$$10 \leqq V \leqq 70 \text{ (Gew.-\%)} \qquad \text{(ii)}$$
$$70 \leqq 2.6S + V \leqq 85 \qquad \text{(iii)}$$

wobei die Teile (C) und (D) Gewichtsteile pro 100 Gewichtsteile der Kautschukkomponente sind.

2. Zusammensetzung nach Anspruch 1, worin die Komponente (A) ein in Lösung polymerisiertes SBR ist, der einen Anteil von nicht wengiger als 50 Gew.-% an mit trifunktionellem oder tetrafunktionellem Kupplungsmittel modifizierten Polymerketten besitzt.

3. Zusammensetzung nach Anspruch 1, worin die Komponente (A) ein in Lösung polymerisiertes SBR ist, worin der Gehalt an gebundenem Styrol (S) und der Vinylgehalt (V) in dem Butadienanteil durch die folgenden Gleichungen (iv) bis (vi) definiert sind:

$$10 \leqq S < 30 \text{ (Gew.-\%)} \tag{iv}$$
$$10 \leqq V \leqq 60 \text{ (Gew.-\%)} \tag{v}$$
$$75 \leqq 2.6S + V \leqq 85 \tag{vi}$$

4. Zusammensetzung nach Anspruch 1, worin das trifunktionelle oder tetrafunktionelle Kupplungsmittel in der Komponente (A) mindestens eine Verbindung ist, ausgewählt aus der Gruppe bestehend aus Siliciumtetrachlorid, Zinntetrachlorid, Germaniumtetrachlorid, Methyltrichlorsilan, Dimethyladipat, Diethyladipat, Di-n-Butyladipat, Dimethylmaleat, Di-n-butylmaleat und Di-n-octylmaleat.

5. Zusammensetzung nach Anspruch 1, worin die Kautschukkomponente von 60 bis 90 Gewichtsteilen der Komponente (A) und von 10 bis 40 Gewichtsteilen der Komponente (B) umfaßt.

**Revendications**

1. Composition élastomère pour bandes de roulement de pneus, comportant 100 parties en poids d'un composant élastomère renfermant:

(A) pas moins de 40 parties en poids d'un caoutchouc styrène-butadiène polymérisé en solution, présentant une teneur en styrène lié (S) et une teneur en vinyle (V) de la partie butadiène, définies par les équations suivantes (i), (ii) et (iii), présentant une proportion de chaînes polymères modifiées par un agent de pontage trifonctionnel ou tétrafonctionnel non inférieur à 40% en poids, et présentant une viscosité intrinsèque non inférieure à 1,7 à non inférieure à 3,0 dans une solution de toluène à 30°C, et

(B) pas plus de 60 parties en poids d'au moins un élément choisi dans le groupe constitué par un caoutchouc styrène-butadiène polymérisé en émulsion, un caoutchouc naturel, un caoutchouc en polyisoprène synthétique, un caoutchouc de haut-cis-butadiène;

(C) de 5 à 25 parties en poids d'une huile de traitement présentant un point d'écoulement de 0° à moins de 30°C; et

(D) 40 à 70 parties en poids de noir de carbone présentant une dimension moyenne des particules ne dépassant pas 30 nm

$$0 \leq S < 30 \text{ (\% en poids)} \tag{i}$$
$$10 \leq V \leq 70 \text{ (\% en poids)} \tag{ii}$$
$$70 \leq 2,6S + V \leq 85 \tag{iii}$$

lesdites parties de (C) et (D) étant des parties en poids pour 100 parties en poids dudit composant élastomère.

2. La composition de la revendication 1, dans laquelle ledit composant (A) est un caoutchouc styrène-butadiène polymérisé en solution, présentant une proportion de chaîne polymère modifiée par un agent de pontage trifonctionnel ou tétrafonctionnel, qui n'est pas inférieur à 50% en poids.

3. La composition de la revendication 1, caractérisée en ce que ledit composant (A) est une solution de caoutchouc styrène-butadiène polymérisé en solution, dans laquelle ladite teneur en styrène (S) et ladite teneur en vinyle (V) dans la partie butadiène sont définies par les équations suivantes (iv) à (vi):

$$10 \leq S < 30 \text{ (\% en poids)} \tag{iv}$$
$$10 \leq V \leq 60 \text{ (\% en poids)} \tag{v}$$
$$75 \leq 2,6S + V \leq 85 \tag{vi}$$

4. La composition de la revendication 1, dans laquelle l'agent de pontage difonctionnel ou tétrafonctionnel dans le composant (A) est au moins un composé choisi dans le groupe constitué par le tétrachlorure de silicium, le tétrachlorure d'étain, le tétrachlorure de germanium, le méthyltrichlorosilane, l'adipate de diméthyle, l'adipate de diéthyle, l'adipate de di-n-butyle, le maléate de diméthyle, le maléate de di-n-butyle et le maléate de di-n-octyle.

5. La composition de la revendication 1, dans laquelle ledit composant élastomère comporte de 60 à 90% en poids dudit composant (A) et 10 à 40 parties en poids dudit composant (B).